# EUROPÄISCHE PATENTSCHRIFT

(11) **EP 3 013 552 B1**
(45) Veröffentlichungstag und Bekanntmachung des Hinweises auf die Patenterteilung: **28.08.2019**
(21) Anmeldenummer: 14731659.0
(22) Anmeldetag: 23.06.2014
(51) Int. Cl.: B29C 48/285, B29C 48/694, B29C 48/92, B29C 48/39

(54) **VORRICHTUNG UND VERFAHREN ZUM EINBRINGEN VON FASERN IN EINEN EXTRUDER**
DEVICE AND METHOD FOR INTRODUCING FIBRES INTO AN EXTRUDER
DISPOSITIF ET PROCÉDÉ DE CHARGEMENT DE FIBRES DANS UNE EXTRUDEUSE

(30) Priorität: 26.06.2013 DE 102013212167
(43) Veröffentlichungstag der Anmeldung: 04.05.2016
(73) Patentinhaber: Fraunhofer-Gesellschaft zur Förderung der angewandten Forschung e.V., 80686 München (DE)
(72) Erfinder: BUSCH, Michael, 06130 Halle (DE); WERRLICH, Stefan, 06231 Bad Dürrenberg (DE); NAGEL, Frank, 06116 Halle (DE); JAHN, Ivonne, 06237 Leuna (DE)
(74) Vertreter: Pfenning, Meinig & Partner mbB
(86) Internationale Anmeldenummer: PCT/EP2014/063108
(87) Internationale Veröffentlichungsnummer: WO 2014/206912

(56) Entgegenhaltungen:
- EP-A1- 2 072 217
- AT-A4- 512 170
- GB-A- 1 133 063
- JP-A- H0 577 241
- JP-A- 2009 097 137
- JP-A- 2011 131 448
- US-A- 4 128 404

## Beschreibung

Es werden eine Vorrichtung und ein Verfahren zum Einbringen von Fasern in einen Extruder bereitgestellt. Die Vorrichtung zeichnet sich dadurch aus, dass sie eine gleichmäßige Förderung von Fasern, beispielsweise Naturfasern, in einen Extruder bewirken kann. Darüber hinaus wird durch die Vorrichtung eine gegenüber aus dem Stand der Technik bekannten Vorrichtungen (siehe zum Beispiel die Druckschriften AT512170 A4, US4128404 A, GB1133 063 A) erhöhte Förderleistung und homogenere Förderung von Fasern in den Extruder bewirkt. Diese Wirkungen erreicht die erfindungsgemäße Vorrichtung im Wesentlichen dadurch, dass sie eine Kombination aus einem Trichter und einer Filtervorrichtung zur mechanischen Abtrennung von Fasern aus einem Faser-Luft-Gemisch sowie eine in die Filtervorrichtung integrierte Faserfördereinheit zum regulierten Transport der Fasern in den Extruder aufweist. Die Faserfördereinheit verfügt über mindestens eine Schnecke.

Die Herstellung von mit Fasern verstärkten Kunststoff-Gemischen erfolgt üblicherweise in einem Compoundier-Extruder. Mit den Fasern sollen spezielle Eigenschaften des Faser-Kunststoff-Gemisches erreicht werden wie zum Beispiel hohe Steifigkeiten und Festigkeiten. Um ein hohes Eigenschaftsniveau zu erreichen ist es erforderlich, die Fasern möglichst schonend in die Kunststoffschmelze einzuarbeiten und sie darin möglichst homogen zu verteilen.

Hierfür müssen die Fasern zunächst in den Extruder möglichst gleichmäßig durch offene Extruder-Zylinderelemente eingebracht werden. Bei der Zuführung der Fasern ist darauf zu achten, dass diese dabei sowohl möglichst wenig geschädigt werden als auch sich nicht zu im Extruder schwer verteilbaren Agglomeraten verhaken bzw. verdichten. Grundsätzlich können die Fasern dem Extruder entweder als Garne oder als kurze Fasern, zum Beispiel Schnittfasern, zugeführt werden. Während die Garne durch Öffnungen in den Zylinderelementen direkt eingeführt und dann von den Schnecken des Extruders in den Extruder gezogen werden können, erfordert der Eintrag kurzer Fasern, die häufig als eine Art Gewölle vorliegen und über eine geringe Schüttdichte verfügen, in der Regel spezielle Zuführeinrichtungen wie Fördereinrichtungen oder Stopfwerke.

Damit kurze Fasern mit hoher Förderkonstanz in den Extruder gebracht werden können sollten sie rieselfähig sein. Häufig liegen jedoch schlecht rieselfähige Fasern mit niedrigem Schüttgewicht als Ausgangsfasern vor, die bereits in der Dosiervorrichtung oder danach im Stopfwerk am Extruder zur Brückenbildung neigen und mit dem technisch verfügbaren Equipment nicht in der erforderlichen Menge und Konstanz in den Extruder gebracht werden können. Bei geschnittenen Textil- oder Naturfasern sind Faser-Schüttgewichte von unter 30g/l nicht ungewöhnlich.

Die mit dem geringen Faser-Schüttgewicht verbundenen großen Faservolumina, die dem Extruder entsprechend dem vorgegebenen Extruderdurchsatz pro Zeiteinheit zuzuführen sind, stellen insbesondere für die für eine effiziente Verarbeitung angestrebten hohen Extruderdurchsätze ein kaum zu lösendes Problem dar. Um die großen Faservolumina durch die kleine Öffnung des Extruders hindurch zu bekommen müssen die Fasergewölle vom Stopfwerk zugleich verdichtet werden, dürfen dabei aber auch nicht zu stark kompaktieren, da sie sonst im Extruder nicht wieder dispergiert werden können und störende Agglomerate im Faser-Kunststoff-Gemisch bilden.

Fasern mit niedrigem Schüttgewicht können bisher nur entweder nach spezieller Aufbereitung, z. B. durch eine vorangegangene Kompaktierung der Fasern zu rieselfähigen Faserpellets, oder in geringer Menge pro Zeiteinheit in Extruder für die Kunststoffaufbereitung eingebracht werden.

Zum Eintrag von geschnittenen Fasern in Extruder für die Kunststoffverarbeitung werden Zweiwellenfördereinrichtungen oder Stopfwerke verwendet. Die Zweiwellenfördereinrichtungen, die meist seitlich am Extruder an einem speziellen, seitlich offenen Extruder-Zylinderelement angekoppelt sind und diesen von der Seite befüllen, bestehen aus einem Zuführbehälter mit starren Wänden, in dem sich noch ein Rührer befinden kann, auf dessen Grund in einem Rohr das in den Extruder mündet, zwei gleich oder gegendrehende Schnecken laufen. Die Schnecken befördern das Material aus dem Zuführbehälter in den Extruder. Der Rührer, falls ein solcher vorhanden ist, soll eine Brückenbildung im Zuführbehälter verhindern und die Bewegung des Materials zu den fördernden Schnecken unterstützen.

Hat das Material eine geringe Schüttdichte neigt es allerdings dazu, auf den Schnecken zu schwimmen, d. h. es wird von diesen nicht hinreichend (sowohl bezüglich der Menge als auch der Gleichmäßigkeit) mitgenommen und in den Extruder gefördert.

Häufig werden z.B. Glasfasern dem Extruder über Zweiwellenfördereinrichtungen zugeführt. Für Naturfasern ist diese Methode unzureichend, da die Fasern durch gegenseitige Wechselwirkung und durch die Wechselwirkung zum Metall verfilzen. Bei den Wechselwirkungen handelt es sich dabei um auftretende Reibungskräfte die an der Oberfläche der Fasern entstehen. Das Resultat ist die Bildung von Fasergewöllen.

Stopfwerke, die vorzugsweise über dem Extruder an einem oben offenen Extruder-Zylinderelement angebracht sind und die Fasern dem Extruder von oben zuführen, bestehen aus einem konischen, trichterförmigen Behälter mit starren Wänden mit einer im Inneren in der Mitte des Behälters drehenden, sich konisch nach unten zum Ausgang des Stopfwerks hin verjüngenden Schnecke. Die konisch ausgeführte Schnecke soll das Material auf dem Weg zum Ausgang des Stopfwerks komprimieren und zwangsweise in den Extruder befördern. Es sind auch Ausführungen mit einem konischen Behälter mit starren Wänden und zwei im Inneren in der Mitte des Behälters drehenden parallelen Schnecken mit einem Rührwerk, das die Brückenbildung verhindern soll, bekannt.

Nachteile der zuvor beschriebenen Fördereinrichtungen sind die zu geringe Förderleistung, eine ungleichmäßige Komprimierung und Förderung und die daraus resultierende pulsierende Förderung. Bei sehr geringen Schüttgewichten drehen sich die Schnecken leer über das Material, so dass keine Förderung stattfindet und das Material sich im Behälter aufstaut.

Für die schonende Verarbeitung von kurzen Fasern wurde am Fraunhofer IWM-H das Konzept der "Zweiwelligen Bandfördereinrichtung" (ZBFE) entwickelt. Die Fasern gelangen hier über ein Fallrohr in die ZBFE. Die ZBFE verfügt über eine dichtkämmende Doppelschnecke und zwei Bandförderer, die eine unterstützende Förderwirkung aufweisen. Durch die ZBFE kann ein hoher Fasereintrag in den Extruder gewährleistet werden, da die Fasern eine Zwangsrichtung erhalten. Die ZBFE ist über einen Dom fest mit dem Extruder verbunden. Über diese Schnittstelle gelangen die Schnittfasern in den Extruder. Bei hohen Dursätzen kann es allerdings zu einer Brückenbildung der Fasern kommen und das Fallrohr kann verstopfen. Der Faserdurchsatz muss daher so eingestellt werden, dass eine Brückenbildung ausgeschlossen werden kann, was das Prozessfenster erheblich einschränkt. Diese beiden Anforderungen begrenzen den Einsatzbereich der ZBFE erheblich.

Die Firma TEMAFA Machines hat ein Gerät entwickelt, mit dem es möglich ist, Fasern aus einem Luftstrom zu filtern. Die Anlage wurde für die Förderung von Faser konzipiert und dient dazu, die Fasern gezielt auf einem Förderband abzulegen und diese weiter zu transportieren. Das Gerät wird als Kondenserzyklon (KZN) bezeichnet, wobei ein Faser-Luft-Gemisch über eine Einspeisung in den KZN gelangt. Über das flexible Gewebe, das im Inneren verbaut ist, werden Fasern und Luft getrennt. Die Luft wird über eine Absaugung aus dem KZN abgeführt. Die Fasern, die kleiner sind als die lichte Maschenweite des Gewebes werden mit der Luft abgesaugt. Fasern die größer sind gelangen nicht durch das Gewebe und bleiben auf der Innenseite zurück. Die Fasern fallen nach unten aus dem KZN.

Ausgehend hiervon war es die Aufgabe der vorliegenden Erfindung, eine Vorrichtung und ein Verfahren zum Einbringen von Fasern in einen Extruder bereitzustellen, das eine gleichmäßige Komprimierung und Förderung der Fasern in den Extruder bewirkt und sich durch eine gegenüber dem Stand der Technik erhöhte Förderleistung auszeichnet.

Die Aufgabe wird gelöst durch die Vorrichtung mit den Merkmalen von Anspruch 1 und das Verfahren mit den Merkmalen von Anspruch 12.

Erfindungsgemäß wird eine Vorrichtung zum Einbringen von Fasern in einen Extruder bereitgestellt, enthaltend
a) einen Trichter mit einer ersten Öffnung an der Grundfläche des Trichters und einer zweiten Öffnung am Apex des Trichters,
b) einen Eingang für die Einspeisung eines Faser-Luft-Gemisches in die erste Öffnung des Trichters,
c) eine Filtervorrichtung zur Abtrennung der Fasern aus einem Faser-Luft-Gemisch, wobei die Filtervorrichtung eine Filtermembran mit einer Innenseite und einer Außenseite enthält und Richtung Innenseite einen Eingang und einen Ausgang aufweist, wobei der Eingang mit der zweiten Öffnung des Trichters verbunden ist und der Ausgang zur Verbindung mit einem Extruder geeignet ist,
d) eine Faserfördereinheit zum regulierten Transport der Fasern aus der Filtervorrichtung in den Extruder mit mindestens einer Schnecke, wobei die Schnecke über eine Welle mit einem Antrieb, bestehend aus einem Getriebe und einem Motor, verbunden ist und die Schnecke in der Filtervorrichtung entlang der Innenseite der Filtermembran angeordnet ist.

Die Abfuhr der Luft aus der Filtereinrichtung erfolgt vorzugsweise durch die Filtermembran von der Innenseite zur Außenseite.

Bei dem erfindungsgemäßen Verfahren werden die Fasern vorzugsweise druckgefördert als Faser-Luft-Gemisch in die Anlage transportiert. Die Anlage muss dafür mit mindestens einer Vorrichtung zur pneumatischen Druckförderung, bevorzugt mindestens einem Verdichter, insbesondere einem Hubkolbenverdichter und/oder Schraubenverdichter, verbunden sein. Der Transport der Fasern mit einem durch eine pneumatische Druckförderung erzeugten Druckluftstrom erlaubt wesentlich höhere Faser-Luft-Durchsätze als beispielsweise eine vergleichbare Saugförderung und ist sehr einfach und prozesssicher zu realisieren.

Das Faser-Luft-Gemisch gelangt am Ende des Trichters in die Filtervorrichtung, wo die Fasern von der Luft getrennt werden. Der konische Trichter hat vor allem die Aufgabe, den ankommenden Luftstrom mit möglichst geringem Widerstand aufzunehmen und ihn in die Filtervorrichtung zu führen.

Die Fasern werden durch den Luftstrom mit dem Faser-Luft-Gemisch in das Innere der Filtervorrichtung transportiert. Die Luft kann durch die Filtermembran in Richtung von deren Innenseite zu deren Außenseite entweichen. Dabei werden die Fasern bei geeigneter Filterporengröße an der Filtermembran von der Luft getrennt und an die Innenseite der Filtermembran gedrückt.

An der Außenseite der Filtermembran gelangt die Luft aus der Filtervorrichtung heraus. Die Filtervorrichtung kann von einem Behälter umschlossen werden, der eine Öffnung besitzt, durch die die Luft nach außen wegströmen kann. Das Austreten der Luft kann durch eine an die Öffnung des Behälters angeschlossene Absaugung unterstützt werden. Hierfür ist der Ausgang des Behälters um die Filtervorrichtung herum für die Abfuhr von Luft bevorzugt mit mindestens einer Vorrichtung zur Erzeugung eines Unterdruckes, bevorzugt einer Vakuumpumpe, zu verbinden.

In einer bevorzugten Ausgestaltungsform weist die Faserfördereinrichtung zwei Schnecken, d.h. ein Schneckenpaar, auf, das bevorzugt gleichsinnig drehend und dicht kämmend ist. Die Filtervorrichtung ist so gestaltet, dass die Filtermembran die Schnecken mit geringem Abstand umhüllt.

Der Eingang der Filtervorrichtung kann über einen Adapter, bevorzugt reversibel, mit der zweiten Öffnung des Trichters verbunden sein.

In einer bevorzugten Ausgestaltungsform sind die Fasern in dem Faser-Luft-Gemisch
a) vereinzelt;
b) in der Luft gleichmäßig verteilt;
c) die Fasern weisen eine Länge zwischen 0,1 mm und 200 mm auf; und/oder
d) die Fasern enthalten Naturfasern und/oder Chemiefasern und/oder Zellulosefasern und/oder Zelluloseregeneratfasern und/oder Glasfasern und/oder Carbonfasern oder bestehen daraus.

Die Filtermembran der Filtervorrichtung besteht vorzugsweise aus einem Drahtgeflecht.

Bei dem Getriebe kann es sich um ein Stirnradgetriebe, bevorzugt ein vierstufiges Stirnradgetriebe handeln. Bei dem Motor handelt es sich bevorzugt um einen Elektromotor, besonders bevorzugt einen Drehstrommotor.

Die mindestens eine Schnecke kann eine Steigung von 10 bis 40 mm, bevorzugt 15 bis 30 mm aufweisen. Die mindestens eine Schnecke kann in einem Abstand von 1 bis 5 mm, bevorzugt 1 bis 2 mm, zur Filtermembran angeordnet sein.

Erfindungsgemäß wird ein Extruder enthaltend die erfindungsgemäße Vorrichtung bereitgestellt, wobei der Extruder dadurch gekennzeichnet ist, dass der Ausgang der Filtervorrichtung Richtung Innenseite der Filtermembran mit einer Öffnung des Extruders verbunden ist.

Der Extruder kann dadurch gekennzeichnet sein, dass der Ausgang, bevorzugt über einen Adapter, besonders bevorzugt reversibel, mit einer Öffnung des Extruders verbunden ist.

Des Weiteren wird erfindungsgemäß ein Verfahren zum Einbringen von Fasern in einen Extruder bereitgestellt, umfassend die Schritte:
a) Einspeisung eines Faser-Luft-Gemisches in eine erste Öffnung an der Grundfläche eines Trichters, wobei sich das Faser-Luft-Gemisch in Richtung einer zweiten Öffnung am Apex des Trichters bewegt und dort konzentriert,
b) Abtrennung der Fasern aus dem Faser-Luft-Gemisch in einer am Apex des Trichters nachgeschalteten Filtervorrichtung, wobei die Filtervorrichtung eine Filtermembran mit einer Innenseite und einer Außenseite enthält und die Fasern an der Innenseite der Filtermembran zurückgehalten werden und die Luft die Filtermembran von der Innenseite zur Außenseite passiert,
c) Transportieren der Fasern über mindestens eine Faserfördereinheit mit mindestens einer Schnecke in Richtung einer Öffnung von einem Extruder, wobei die Schnecke über eine Welle mit einem Antrieb, bestehend aus einem Getriebe und einem Motor, angetrieben wird und die mindestens eine Schnecke in der Filtervorrichtung Richtung Innenseite der Filtermembran angeordnet ist.

Das Verfahren kann dadurch gekennzeichnet sein, dass die Einspeisung des druckgeförderten Faser-Luft-Gemisches mit mindestens einer Vorrichtung zur pneumatischen Druckförderung, bevorzugt mindestens einem Verdichter, insbesondere einem Hubkolbenverdichter und/oder Schraubenverdichter, bewirkt wird.

In einer bevorzugten Ausführungsform erfolgt das Austreten der Luft aus der Filtervorrichtung in einen die Filtervorrichtung umschließenden Behälter mit einer Öffnung und wird durch eine an die Öffnung angeschlossene Absaugung, bevorzugt eine Vakuumpumpe, unterstützt.

In einer bevorzugten Ausführungsform des erfindungsgemäßen Verfahrens wird ein Faser-Luft-Gemisch (10) enthaltend
a) vereinzelte
b) in der Luft gleichmäßig verteilte
c) eine Länge zwischen 0,1 mm und 200 mm aufweisende; und/oder
d) Naturfasern und/oder Chemiefasern und/oder Zellulosefasern und/oder Zelluloseregeneratfasern und/oder Glasfasern und/oder Carbonfasern enthaltende und/oder daraus bestehende
Fasern eingespeist.

Die Schnecke kann über ein Stirnradgetriebe, bevorzugt ein vierstufiges Stirnradgetriebe, angetrieben werden. Weiterhin bevorzugt wird die Schnecke über einen Elektromotor, bevorzugt einen Drehstrommotor, insbesondere mit einer Drehzahl von 50 bis 300 U/min, angetrieben.

Besonders bevorzugt werden die angereicherten Fasern in dem Verfahren zu einer Öffnung des Extruders transportiert, welche
a) stromabwärts von einer Öffnung zum Pelleteinzug des Extruders;
b) stromaufwärts von einer Öffnung zur Entgasung des Extruders; und/oder
c) stromaufwärts von dem Ausgang des Extruders;
angeordnet ist, wobei die Öffnung insbesondere seitlich oder an der Oberseite des Extruders angeordnet ist.

In einer bevorzugten Ausführungsform der Erfindung wird die erfindungsgemäße Vorrichtung in dem erfindungsgemäßen Verfahren verwendet.

Ferner wird die Verwendung der erfindungsgemäßen Vorrichtung zum Einbringen von Fasern in einen Extruder vorgeschlagen.

Anhand der nachfolgenden Figuren soll der erfindungsgemäße Gegenstand näher beschrieben werden ohne diesen auf die hier dargestellten spezifischen Ausführungsformen einschränken zu wollen.

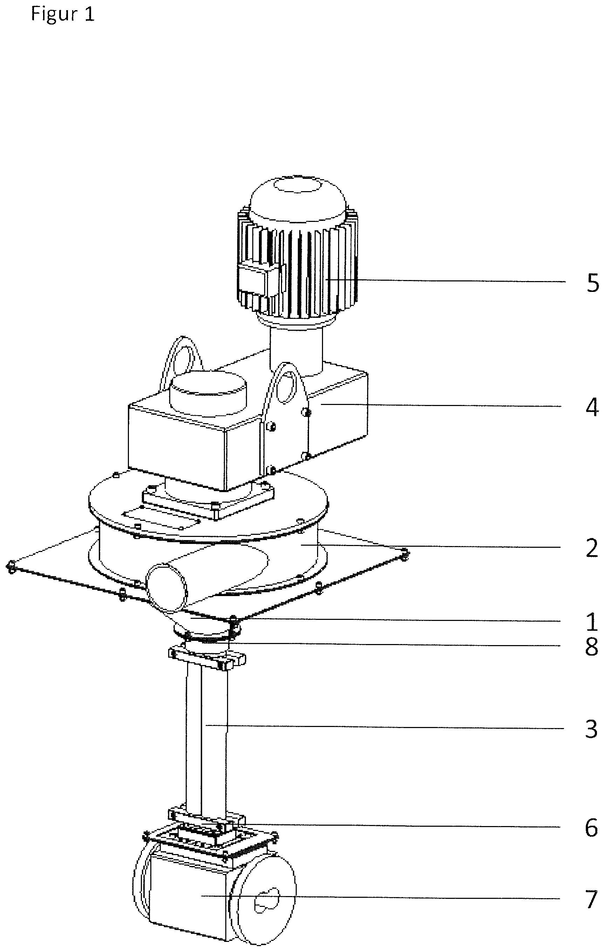

Figur 1 zeigt eine erfindungsgemäße Vorrichtung in der Form eines zweiwelligen Filterstopfwerks (ZFSW). Der Trichter 1 ist stoffschlüssig mit der Einspeisung 2 verbunden, durch welche ein Faser-Luft-Gemisch in den Trichter eingeleitet werden kann. Über einen reversibel am Trichter 1 befestigten Trichteranschluss 8 ist ein Eingang von einer Filtervorrichtung 3 mit dem Trichter 1 kraftschlüssig verbunden. Der Ausgang von der Filtervorrichtung 3 ist über eine Klemmschelle 6 reversibel mit dem Eingang eines Extruders 7 befestigt. Über der Einspeisung 2 sind ein 4-stufiges Stirnradgetriebe 4 und ein Drehstrommotor 5 angeordnet, welche mit einer Schnecke verbunden sind, die in der Filtervorrichtung 3 angeordnet ist und deren Welle sich zumindest bereichsweise durch den Trichter 1 erstreckt.

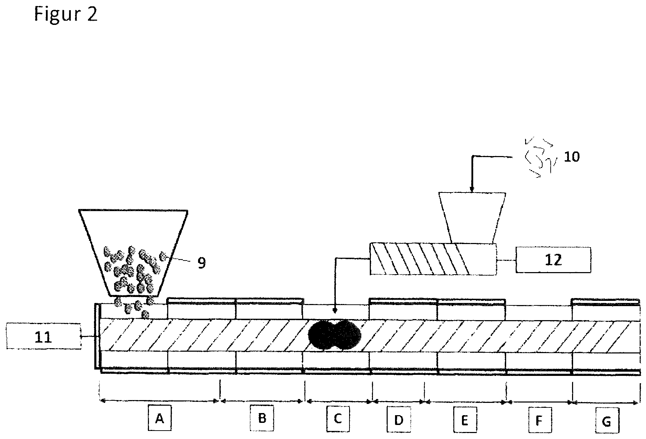

Figur 2 zeigt eine Anschlussposition der erfindungsgemäßen Vorrichtung an einen Extruder und einzelne Phasen des Extrudierverfahrens. Der Extruder enthält mindestens eine Schnecke 11, die am Eingang A des Extruders Kunststoffpellets 9 aufnimmt und Richtung Ausgang G des Extruders transportiert. Im Bereich B des Extruders findet eine Plastifizierung der Kunststoffpellets statt, bevor über die Öffnung C im Extruder-Zylinderelement die Fasern aus einem Faser-Luft-Gemisch 10 von der Schnecke der Faserfördereinheit in den Extruder transportiert werden. Die Fasern werden im Bereich D des Extruders dispergiert und schließlich im Bereich E homogenisiert. Über eine weitere Öffnung im Extruderzylinderelement F findet eine Entgasung der faserhaltigen Kunststoffschmelze statt, bevor die Schmelze im Bereich G komprimiert und aus dem Extruder ausgetragen wird.

## Patentansprüche

1. Vorrichtung zum Einbringen von Fasern in einen Extruder, enthaltend
a) einen Trichter (1) mit einer ersten Öffnung an der Grundfläche des Trichters (1) und einer zweiten Öffnung am Apex des Trichters (1),
b) einen Eingang (2) für die Einspeisung eines Faser-Luft-Gemisches in die erste Öffnung des Trichters,
c) eine Filtervorrichtung (3) zur Abtrennung der Fasern aus einem Faser-Luft-Gemisch (10), wobei die Filtervorrichtung eine Filtermembran mit einer Innenseite und einer Außenseite enthält und Richtung Innenseite einen Eingang und einen Ausgang aufweist, wobei der Eingang mit der zweiten Öffnung des Trichters (8) verbunden ist und der Ausgang zur Verbindung (6) mit einem Extruder (7) geeignet ist,
d) eine Faserfördereinheit zum regulierten Transport der Fasern aus der Filtervorrichtung in den Extruder mit mindestens einer Schnecke (12), wobei die Schnecke über eine Welle mit einem Antrieb, bestehend aus einem Getriebe (4) und einem Motor (5), verbunden ist und die Schnecke in der Filtervorrichtung (3) entlang der Innenseite der Filtermembran angeordnet ist.

2. Vorrichtung gemäß Anspruch 1, **dadurch gekennzeichnet, dass** der Eingang (2) für die Einspeisung des druckgeförderten Faser-Luft-Gemisches (10) mit mindestens einer Vorrichtung zur pneumatischen Druckförderung, bevorzugt mindestens einem Verdichter, insbesondere einem Hubkolbenverdichter und/oder Schraubenverdichter, verbunden ist.

3. Vorrichtung nach einem der vorhergehenden Ansprüche,
**dadurch gekennzeichnet, dass** die Filtervorrichtung von einem Behälter mit einer Öffnung, durch die die Luft ausströmen kann, umschlossen wird, und an die Öffnung insbesondere eine Absaugung zur Unterstützung der Abfuhr der Luftangeschlossen ist.

4. Vorrichtung gemäß einem der vorhergehenden Ansprüche, **dadurch gekennzeichnet, dass** der Eingang der Filtervorrichtung über einen Adapter (8), bevorzugt reversibel, mit der zweiten Öffnung des Trichters verbunden ist.

5. Vorrichtung gemäß einem der vorhergehenden Ansprüche, **dadurch gekennzeichnet, dass** die Fasern in dem Faser-Luft-Gemisch (10) mindestens eine der folgenden Eigenschaften erfüllt:
a) die Fasern sind vereinzelt;
b) die Fasern sind in der Luft gleichmäßig verteilt;
c) die Fasern weisen eine Länge zwischen 0,1 mm und 200 mm auf; und/oder
d) die Fasern enthalten Naturfasern und/oder Chemiefasern und/oder Zellulosefasern und/oder Zelluloseregeneratfasern und/oder Glasfasern und/oder Carbonfasern oder bestehen daraus.

6. Vorrichtung gemäß einem der vorhergehenden Ansprüche, **dadurch gekennzeichnet, dass** die Filtermembran der Filtervorrichtung (3) aus einem Drahtgeflecht besteht.

7. Vorrichtung gemäß einem der vorhergehenden Ansprüche, **dadurch gekennzeichnet, dass** es sich bei dem Getriebe (4) um ein Stirnradgetriebe, bevorzugt ein vierstufiges Stirnradgetriebe handelt und/oder dass es sich bei dem Motor (5) um einen Elektromotor, bevorzugt einen Drehstrommotor, handelt.

8. Vorrichtung gemäß einem der vorhergehenden Ansprüche, **dadurch gekennzeichnet, dass** die mindestens eine Schnecke eine Steigung von 10 bis 40 mm, bevorzugt 15 bis 30 mm aufweist.

9. Vorrichtung gemäß einem der vorhergehenden Ansprüche, **dadurch gekennzeichnet, dass** die Schnecke in einem Abstand von 1 bis 5 mm, bevorzugt 1 bis 2 mm, zur Filtermembran (3) angeordnet ist.

10. Vorrichtung gemäß einem der Ansprüche 1 bis 9, **dadurch gekennzeichnet, dass** der Ausgang der Filtervorrichtung Richtung Innenseite der Filtermembran (3) mit einer Öffnung eines Extruders (7) verbunden ist.

11. Vorrichtung (7) gemäß Anspruch 10, **dadurch gekennzeichnet, dass** der Ausgang, bevorzugt über einen Adapter (6), besonders bevorzugt reversibel, mit einer Öffnung (C) des Extruders (7) verbunden ist, welche insbesondere
a) stromabwärts von einer Öffnung (A) zum Pelleteinzug des Extruders (7);
b) stromaufwärts von einer Öffnung (C) zur Entgasung des Extruders (7); und/oder
c) stromaufwärts von dem Ausgang (G) des Extruders (7); angeordnet ist, wobei die Öffnung (C) vorzugsweise an der Oberseite des Extruders (7) oder seitlich angeordnet ist.

12. Verfahren zum Einbringen von Fasern in einen Extruder, umfassend die Schritte:
a) Einspeisung von einem Faser-Luft-Gemisch (10) in eine erste Öffnung an der Grundfläche eines Trichters (1), wobei sich das Faser-Luft-Gemisch (10) in Richtung einer zweiten Öffnung am Apex des Trichters (1) bewegt und dort konzentriert,
b) Abtrennung der Fasern aus dem Faser-Luft-Gemisch (10) in einer am Apex des Trichters (1) nachgeschalteten Filtervorrichtung (3), wobei die Filtervorrichtung eine Filtermembran mit einer Innenseite und einer Außenseite enthält und die Fasern an der Innenseite der Filtermembran zurückgehalten werden und die Luft die Filtermembran von der Innenseite zur Außenseite passiert,
c) Transportieren der Fasern über eine Faserfördereinheit mit mindestens einer Schnecke (12) in Richtung einer Öffnung (C) von einem Extruder (7), wobei die Schnecke über eine Welle mit einem Antrieb, bestehend aus einem Getriebe (4) und einem Motor (5), angetrieben wird und die mindestens eine Schnecke in der Filtervorrichtung zumindest bereichsweise innerhalb des Trichters (1) und Richtung Innenseite der Filtermembran (3) angeordnet ist.

13. Verfahren gemäß Anspruch 12, **dadurch gekennzeichnet, dass** die Einspeisung von dem Faser-Luft-Gemisch (10) mit mindestens einer Vorrichtung zur pneumatischen Druckförderung, bevorzugt mindestens einem Verdichter, insbesondere einem Hubkolbenverdichter und/oder Schraubenverdichter, bewirkt wird.

14. Verfahren gemäß Anspruch 12, **dadurch gekennzeichnet, dass** das Austreten der Luft aus der Filtervorrichtung in einen die Filtervorrichtung umschließenden Behälter mit einer Öffnung erfolgt und durch eine an die Öffnung angeschlossene Absaugung, bevorzugt eine Vakuumpumpe, unterstützt wird.

15. Verfahren gemäß einem der Ansprüche 12 bis 14, **dadurch gekennzeichnet, dass** ein Faser-Luft-Gemisch (10) eingespeist wird, das mindestens der folgenden Fasern enthält:
a) kurze Fasern, insbesondere mit einer Länge von 2 bis 12 mm
b) in Luft dispergierte Fasern
c) Naturfasern und/oder Chemiefasern und/oder Zellulosefasern und/oder Zelluloseregeneratfasern und/oder Glasfasern und/oder Carbonfasern enthaltende und/oder daraus bestehende Fasern
d)

16. Verfahren gemäß einem der Ansprüche 12 bis 15, **dadurch gekennzeichnet, dass** die Schnecke über ein Stirnradgetriebe, bevorzugt ein vierstufiges Stirnradgetriebe, angetrieben wird.

17. Verfahren gemäß einem der Ansprüche 12 bis 16, **dadurch gekennzeichnet, dass** die Schnecke über einen Elektromotor, bevorzugt einen Drehstrommotor, insbesondere mit einer Drehzahl von 50 bis 300 U/min, angetrieben wird.

18. Verfahren gemäß einem der Ansprüche 12 bis 17, **dadurch gekennzeichnet, dass** die angereicherten Fasern zu einer Öffnung (C) des Extruders transportiert werden, welche
a) stromabwärts von einer Öffnung (A) zum Pelleteinzug des Extruders (7);
b) stromaufwärts von einer Öffnung (F) zur Entgasung des Extruders (7); und/oder
c) stromaufwärts von dem Ausgang (G) des Extruders (7);
angeordnet ist, wobei die Öffnung (C) insbesondere an der Oberseite des Extruders (7) angeordnet ist.

19. Verfahren gemäß einem der Ansprüche 12 bis 18, **dadurch gekennzeichnet, dass** eine Vorrichtung gemäß einem der Ansprüche 1 bis 11 in dem Verfahren verwendet wird.

## Claims

1. Device for introducing fibres into an extruder, comprising
a) a funnel (1) with a first opening on the base of the funnel (1) and a second opening at the apex of the funnel (1),
b) an inlet (2) for feeding in a fibre-air mixture into the first opening of the funnel,
c) a filter device (3) for separating the fibres from a fibre-air mixture (10), the filter device comprising a filter membrane with an inner side and an outer side and having an inlet and an outlet in the direction of the inner side, the inlet being connected to the second opening of the funnel (1) and the outlet being suitable for connection (6) to an extruder (7),
d) a fibre conveying unit for regulated transport of the fibres from the filter device into the extruder, having at least one screw (12), the screw being connected via a shaft to a drive which consists of a transmission (4) and a motor (5), and the screw being disposed in the filter device (3) along the inner side of the filter membrane.

2. Device according to claim 1,
**characterised in that** the inlet (2) for feeding in the pressure-conveyed fibre-air mixture (10) is connected to at least one device for pneumatic pressure conveyance, preferably at least one compressor, in particular a reciprocating compressor and/or screw compressor.

3. Device according to one of the preceding claims,
**characterised in that** the filter device is enclosed by a container having an opening through which the air can flow out, and in particular a suction means for assisting the discharge of the air is connected to the opening.

4. Device according to one of the preceding claims,
**characterised in that** the inlet of the filter device is connected to the second opening of the funnel via an adapter (8), preferably reversibly.

5. Device according to one of the preceding claims,
**characterised in that** the fibres in the fibre-air mixture (10) fulfil at least one of the following properties:
a) the fibres are isolated;
b) the fibres are distributed uniformly in the air;
c) the fibres have a length between 0.1 mm and 200 mm; and/or
d) the fibres comprise natural fibres and/or chemical fibres and/or cellulose fibres and/or cellulose regenerated fibres and/or glass fibres and/or carbon fibres or consist thereof.

6. Device according to one of the preceding claims,
**characterised in that** the filter membrane of the filter device (3) consists of a wire mesh.

7. Device according to one of the preceding claims,
**characterised in that** the transmission (4) concerns a spur gear, preferably a four-stage spur gear, and/or **in that** the motor (5) concerns an electric motor, preferably a three-phase motor.

8. Device according to one of the preceding claims,
**characterised in that** the at least one screw has a gradient of 10 to 40 mm, preferably 15 to 30 mm.

9. Device according to one of the preceding claims,
**characterised in that** the screw is disposed at a spacing of 1 to 5 mm, preferably 1 to 2 mm, from the filter membrane (3).

10. Device according to one of the claims 1 to 9,
**characterised in that** the outlet of the filter device is connected to an opening of an extruder (7) in the direction of the inner side of the filter membrane (3).

11. Device (7) according to claim 10,
**characterised in that** the outlet is connected to an opening (C) of the extruder (7) via an adapter (6), particularly preferably reversibly, which opening is disposed in particular
a) downstream of an opening (A) for the pellet feed of the extruder (7);
b) upstream of an opening (C) for degassing the extruder (7); and/or
c) upstream of the outlet (G) of the extruder (7);
the opening (C) being disposed preferably on the upper side of the extruder (7) or laterally.

12. Method for introducing fibres into an extruder, comprising the steps:
a) feeding in a fibre-air mixture (10) into a first opening on the base of a funnel (1), the fibre-air mixture (10) being moved in the direction of a second opening at the apex of the funnel (1) and being concentrated there,
b) separating the fibres from the fibre-air mixture (10) in a filter device (3) which is connected subsequently at the apex of the funnel (1), the filter device comprising a filter membrane with an inner side and an outer side, and the fibres being retained on the inner side of the filter membrane, and the air passing through the filter membrane from the inner side to the outer side,
c) transporting the fibres via a fibre conveying unit having at least one screw (12) in the direction of an opening (C) of an extruder (7), the screw being driven via a shaft with a drive which consists of a transmission (4) and a motor (5), and the at least one screw being disposed in the filter device, at least in regions, within the funnel (1) and in the direction of the inner side of the filter membrane (3).

13. Method according to claim 12,
**characterised in that** feeding in of the fibre-air mixture (10) is effected by at least one device for pneumatic pressure conveyance, preferably at least one compressor, in particular a reciprocating compressor and/or screw compressor.

14. Method according to claim 12,
**characterised in that** exit of the air from the filter device is effected into a container surrounding the filter device, said container having an opening, and is assisted by a suction means which is connected to the opening, preferably a vacuum pump.

15. Method according to one of the claims 12 to 14, **characterised in that** a fibre-air mixture (10) is fed in, which comprises at least the following fibres:
a) short fibres, in particular with a length of 2 to 12 mm
b) fibres dispersed in air
c) fibres comprising natural fibres and/or chemical fibres and/or cellulose fibres and/or cellulose regenerated fibres and/or glass fibres and/or carbon fibres and/or consisting thereof.

16. Method according to one of the claims 12 to 15,
**characterised in that** the screw is driven by a spur gear, preferably a four-stage spur gear.

17. Method according to one of the claims 12 to 16,
**characterised in that** the screw is driven via an electric motor, preferably a three-phase motor, in particular with a speed of rotation of 50 to 300 rpm.

18. Method according to one of the claims 12 to 17, **characterised in that** the enriched fibres are transported to an opening (C) of the extruder, which is disposed
a) downstream of an opening (A) for the pellet feed of the extruder (7);
b) upstream of an opening (F) for degassing the extruder (7); and/or
c) upstream of the outlet (G) of the extruder (7);
the opening (C) being disposed in particular on the upper side of the extruder (7).

19. Method according to one of the claims 12 to 18,
**characterised in that** a device according to one of the claims 1 to 11 is used in the method.

## Revendications

1. Dispositif pour l'incorporation de fibres dans une extrudeuse, contenant :
a) un entonnoir (1) avec une première ouverture au niveau de la surface de base de l'entonnoir (1) et une deuxième ouverture au niveau de l'apex de l'entonnoir (1),
b) une entrée (2) pour l'introduction d'un mélange fibres-air dans la première ouverture de l'entonnoir,
c) un dispositif de filtrage (3) pour la séparation des fibres d'un mélange fibres-air (10), le dispositif de filtrage comprenant une membrane de filtrage avec un côté interne et un côté externe et, direction côté interne, une entrée et une sortie, l'entrée étant reliée avec la deuxième ouverture de l'entonnoir (8) et la sortie étant conçue pour la liaison (6) avec une extrudeuse (7),
d) une unité de convoyage de fibres, pour le transport régulé des fibres du dispositif de filtrage vers l'extrudeuse avec au moins une vis sans fin (12), la vis sans fin étant reliée, par l'intermédiaire d'un arbre, avec un entraînement constitué d'une transmission (4) et d'un moteur (5), et la vis sans fin étant disposée dans le dispositif de filtrage (3) le long du côté interne de la membrane de filtrage.

2. Dispositif selon la revendication 1, **caractérisé en ce que** l'entrée (2) pour l'introduction du mélange fibres-air (10) entraîné par pression est reliée avec au moins un dispositif de convoyage par pression pneumatique, de préférence au moins un compresseur, plus particulièrement un compresseur alternatif et/ou un compresseur à vis.

3. Dispositif selon l'une des revendications précédentes, **caractérisé en ce que** le dispositif de filtrage est entouré par un récipient avec une ouverture à travers laquelle l'air peut sortir et, , une aspiration pour favoriser l'évacuation de l'air étant plus particulièrement raccordée à l'ouverture.

4. Dispositif selon l'une des revendications précédentes, **caractérisé en ce que** l'entrée du dispositif de filtrage est reliée, par l'intermédiaire d'un adaptateur (8) de préférence de manière réversible, avec la deuxième ouverture de l'entonnoir.

5. Dispositif selon l'une des revendications précédentes, **caractérisé en ce que** les fibres du mélange fibres air (10) présentent au moins une des propriétés suivantes :
a) les fibres sont séparées ;
b) les fibres sont réparties uniformément dans l'air ;
c) les fibres présentent une longueur entre 0,1 mm et 200 mm ; et/ou
d) les fibres contiennent des fibres naturelles et/ou des fibres chimiques et/ou des fibres de cellulose et/ou des fibres de cellulose régénérée et/ou des fibres de verre et/ou des fibres de carbone ou sont constituées de celles-ci.

6. Dispositif selon l'une des revendications précédentes, **caractérisé en ce que** la membrane de filtrage du dispositif de filtrage (3) est constituée d'un treillis métallique.

7. Dispositif selon l'une des revendications précédentes, **caractérisé en ce que** la transmission (4) est une transmission à roues frontales, de préférence une transmission à roues frontales à quatre étages et/ou le moteur (5) est un moteur électrique, de préférence un moteur à courant triphasé.

8. Dispositif selon l'une des revendications précédentes, **caractérisé en ce que** l'au moins une vis sans fin présente un pas de 10 à 40 mm, de préférence de 15 à 30 mm.

9. Dispositif selon l'une des revendications précédentes, **caractérisé en ce que** la vis sans fin est disposée à une distance de 1 à 5 mm, de préférence de 1 à 2 mm, de la membrane de filtrage (3).

10. Dispositif selon l'une des revendications 1 à 9, **caractérisé en ce que** la sortie du dispositif de filtrage, direction côté interne de la membrane de filtrage (3), est reliée avec une ouverture d'une extrudeuse (7).

11. Dispositif (7) selon la revendication 10, **caractérisé en ce que** la sortie est reliée, de préférence par l'intermédiaire d'un adaptateur (6), plus particulièrement de préférence de manière réversible, avec une ouverture (C) de l'extrudeuse (7), qui est disposée, plus particulièrement
a) en aval d'une ouverture (A) pour l'introduction de pellets de l'extrudeuse (7) ;
b) en amont d'une ouverture (C) pour le dégazage de l'extrudeuse (7) ; et/ou
c) en amont de la sortie (G) de l'extrudeuse (7) ;
l'ouverture C) étant disposée de préférence sur le côté supérieur de l'extrudeuse (7) ou latéralement.

12. Procédé pour l'introduction de fibres dans une extrudeuse, comprenant les étapes suivantes :
a) introduction d'un mélange fibres-air (10) dans une première ouverture sur la surface de base d'un entonnoir (1), le mélange fibres-air (10) se déplaçant en direction d'une deuxième à l'apex de l'entonnoir (1) et s'y concentrant,
b) séparation des fibres du mélange fibres-air (10) dans un dispositif de filtrage (3) branché en aval à l'apex de l'entonnoir (1), le dispositif de filtrage contenant une membrane de filtrage avec un côté interne et un côté externe et les fibres étant retenues sur le côté interne de la membrane de filtrage et l'air traversant la membrane de filtrage du côté interne au côté externe,
c) transport des fibres par l'intermédiaire d'une unité de convoyage de fibres avec au moins une vis sans fin (12) en direction d'une ouverture (C) d'une extrudeuse (7), la vis sans fin étant entraînée, par l'intermédiaire d'un arbre avec un entraînement, constitué d'une transmission (4) et d'un moteur (5), et l'au moins une vis sans fin étant disposée dans le dispositif de filtrage au moins à certains endroits à l'intérieur de l'entonnoir (1) et en direction du côté interne de la membrane de filtrage (3).

13. Procédé selon la revendication 12, **caractérisé en ce que** l'introduction du mélange fibres-air (10) est effectuée avec au moins un dispositif pour le convoyage sous pression pneumatique, de préférence au moins un compresseur, plus particulièrement un compresseur alternatif et/ou un compresseur à vis.

14. Procédé selon la revendication 12, **caractérisé en ce que** la sortie de l'air hors du dispositif de filtrage vers un récipient entourant le dispositif de filtrage a lieu avec une ouverture et est favorisée par une aspiration raccordée à l'ouverture, de préférence une pompe à vide.

15. Procédé selon l'une des revendications 12 à 14, **caractérisé en ce qu'**un mélange fibres-air (10) est introduit, qui contient au moins une des fibres suivantes :
a) fibres courtes, plus particulièrement avec une longueur de 2 à 12 mm
b) des fibres dispersées dans l'air
c) des fibres naturelles et/ou des fibres chimiques et/ou des fibres de cellulose et/ou des fibres de cellulose régénérée et/ou des fibres de verre et/ou des fibres de carbone ou sont constituées de celles-ci.

16. Procédé selon l'une des revendications 12 à 15, **caractérisé en ce que** la vis sans fin est entraînée par l'intermédiaire d'une transmission à roues frontales, de préférence une transmission à roues frontales à quatre étages.

17. Procédé selon l'une des revendications 12 à 16, **caractérisé en ce que** la vis sans fin est entraînée par l'intermédiaire d'un moteur électrique, de préférence un moteur à courant triphasé, plus particulièrement avec une vitesse de rotation de 50 à 300 tours/min.

18. Procédé selon l'une des revendications 12 à 17, **caractérisé en ce que** les fibres enrichies sont transportées vers une ouverture (C) de l'extrudeuse, qui est disposée
a) en aval d'une ouverture (A) pour l'introduction de pellets de l'extrudeuse (7) ;
b) en amont d'une ouverture (F) pour le dégazage de l'extrudeuse (7) ; et/ou
c) en amont de la sortie (G) de l'extrudeuse (7) ;
l'ouverture (C) étant disposée plus particulièrement sur le côté supérieur de l'extrudeuse (7).

19. Procédé selon l'une des revendications 12 à 18, **caractérisé en ce qu'**un dispositif selon l'une des revendications 1 à 11 est utilisé dans le procédé.
